# DEMANDE DE BREVET EUROPEEN

(11) **EP 2 192 002 A1**
(43) Date de publication de la demande: **02.06.2010**
(21) Numéro de dépôt: 09177159.2
(22) Date de dépôt: 26.11.2009
(51) Int. Cl.: B60P 3/06, B61D 3/18

(54) **Véhicule de transport destiné au transport d'essieux et ensemble comprenant un véhicule et un essieu**

(30) Priorité: 27.11.2008 FR 0858072
(71) Demandeur: Sernam Xpress, 92110 Clichy (FR)
(72) Inventeur: Bonnet, Pierre, 24700 Montpon Menesterol (FR); Menegent, Marie-Anne, 95320 Saint Leu la Foret (FR); Zimeliovitch, Olivier, 60260 Lamorlaye (FR)
(74) Mandataire: Cabinet Plasseraud

(57) **Abrégé**

Véhicule de transport (1) destiné au transport d'essieux de wagons et de voitures de chemin de fer, s'étendant suivant une direction longitudinale (X) et comprenant une structure de base (2), une succession de rails (4) solidaires de la structure de base (2) et s'étendant suivant une direction de stockage (Y), des éléments d'arrêt (12, 20) pour empêcher les essieux (6) de rouler le long des rails (4) suivant la direction de stockage (Y), des éléments de bridage (22, 24, 26, 27, 28) aptes à maintenir les essieux (6) au contact des rails (4).

## Description

L'invention concerne un véhicule destiné au transport d'essieux de wagons et/ou de voitures de chemin de fer et un ensemble comprenant un véhicule et un essieu.

Le véhicule est en particulier constitué par une remorque de camion ou par le camion. Le véhicule pourrait également être constitué par une plateforme ou un wagon ferroviaire.

On connait déjà des véhicules de ce type comprenant un plancher sur lequel sont fixés des berceaux en bois recevant les roues de l'essieu. Cette solution n'est guère pratique à utiliser.

L'invention vise à permettre de transporter en toute sécurité les essieux et à réduire le coût de leur transport, notamment en facilitant et en optimisant le chargement du véhicule.

Pour ce faire, conformément à l'invention, le véhicule s'étend suivant une direction longitudinale et comprend une structure de base, une succession de rails solidaires de la structure de base et s'étendant suivant une direction de stockage, des éléments d'arrêt pour empêcher les essieux de rouler le long des rails suivant la direction de stockage et des éléments de bridage aptes à maintenir les essieux au contact des rails.

Ainsi, les essieux sont maintenus de manière sure, avec une hauteur réduite par rapport à la structure de base, ce qui permet d'abaisser le centre de gravité du véhicule. De plus, l'encombrement réduit des moyens utilisés permet d'augmenter la quantité d'essieux transportée pour une surface de chargement donnée.

Selon une autre caractéristique conforme à l'invention, de préférence les éléments de bridage comprennent une sangle munie d'un dispositif de mise en tension de la sangle.

Cette solution est simple, peu onéreuse, facile à mettre en oeuvre et efficace.

Selon une caractéristique complémentaire conforme à l'invention, le dispositif de mise en tension est recouvert d'un patin d'appui destiné à venir au contact de l'essieu.

Ainsi, le dispositif de mise en tension peut être disposé en hauteur pour faciliter sa manipulation par un opérateur, sans risquer d'endommager l'essieu transporté.

Selon une autre caractéristique conforme à l'invention, de préférence les rails font saillie par rapport à la structure de base jusqu'à une extrémité supérieure, et le véhicule comprend en outre un plancher sensiblement plat s'étendant entre les rails, sensiblement jusqu'au niveau de leur extrémité supérieure.

Ainsi, le plancher du véhicule peut aisément permettre de transporter d'autres objets que des essieux.

Selon une autre caractéristique conforme à l'invention, les rails sont constitués par un profilé présentant une portion supérieure renflée et les éléments d'arrêt comprennent une cale maintenue par pincement sur la partie supérieure renflée du rail.

Ainsi, les cales peuvent être aisément déplacées par coulissement sur le rail suivant la direction de stockage tout en étant maintenues sur le rail, afin de s'adapter au diamètre du bandage des roues de l'essieu.

Selon une autre caractéristique conforme à l'invention, la direction de stockage est de préférence sensiblement perpendiculaire à la direction longitudinale.

Ainsi, les essieux peuvent être disposés transversalement, en quinconce sur le véhicule de transport, ce qui augmente encore la quantité d'essieux transportables pour une surface donnée, tout en conservant une largeur de véhicule habituelle.

Selon une caractéristique complémentaire conforme à l'invention, de préférence le véhicule comprend une succession d'au moins quatre rails décalés l'un de l'autre suivant la direction longitudinale entre 40 et 60 centimètres, de préférence sensiblement de 45 centimètres.

Ainsi, la quantité d'essieux transportable est encore accrue.

L'invention concerne en outre un ensemble comprenant un véhicule tel que précité et un essieu comportant deux roues présentant chacune un bandage périphérique et reliées l'une à l'autre par un arbre (axe).

Selon une caractéristique conforme à l'invention, les éléments de bridage prennent de préférence appui sur le bandage de chacune des roues.

Ainsi, le risque d'endommager un essieu est réduit.

Selon une caractéristique complémentaire conforme à l'invention, de préférence les éléments de bridage sont maintenus sur la structure de base, à proximité des rails et entre les rails sur lesquels l'essieu qu'ils maintiennent vient en appui.

Le maintien des essieux est ainsi sûr, simple et efficace.

Selon une autre caractéristique complémentaire, le véhicule présentant un premier essieu et un deuxième essieu, de préférence le premier essieu comprend une roue reposant sur un premier rail et une roue reposant sur un deuxième rail, le deuxième essieu comprend une roue reposant sur un troisième rail et une roue reposant sur un quatrième rail, le troisième rail s'étend entre le premier rail et le deuxième rail, et le deuxième rail s'étend entre le troisième rail et le quatrième rail.

Cette disposition en quinconce des essieux permet d'accroitre le nombre d'essieux transportables pour une surface donnée.

D'autres caractéristiques et avantages de la présente invention apparaîtront dans la description détaillée suivante, se référant aux dessins annexés dans lesquels :
- la figure 1 illustre schématiquement de côté un ensemble conforme à l'invention,
- la figure 2 illustre schématiquement l'ensemble en vue de dessus,
- la figure 3 est une vue partielle en perspective selon la flèche repérée III à la figure 2,
- la figure 4 est une vue partielle selon la flèche repérée IV à la figure 3.

Les figures illustrent un ensemble 10 comprenant une pluralité d'essieux 6 et un véhicule de transport 1 constitué, dans le mode de réalisation illustré, par une remorque de transport routier.

Le véhicule de transport 1 s'étend suivant une direction longitudinale X et comprend essentiellement un châssis, des rails 4, des éléments d'arrêt 12, 20 et des éléments de bridage 22, 24, 26, 27, 28.

Le châssis comprend une plateforme de base 2 sur laquelle sont fixés, par soudage, boulonnage ou analogue une succession de rails 4 s'étendant parallèlement les uns aux autres suivant une direction transversale Y, perpendiculaire à la direction longitudinale X.

Les rails 4 sont constitués par des profilés identiques et s'élèvent depuis la plateforme de base 2 suivant une direction d'élévation Z, perpendiculaire à la direction longitudinale X et à la direction transversale Y. Ils comportent une partie supérieure renflée 3 présentant une surface supérieure 5 extrême.

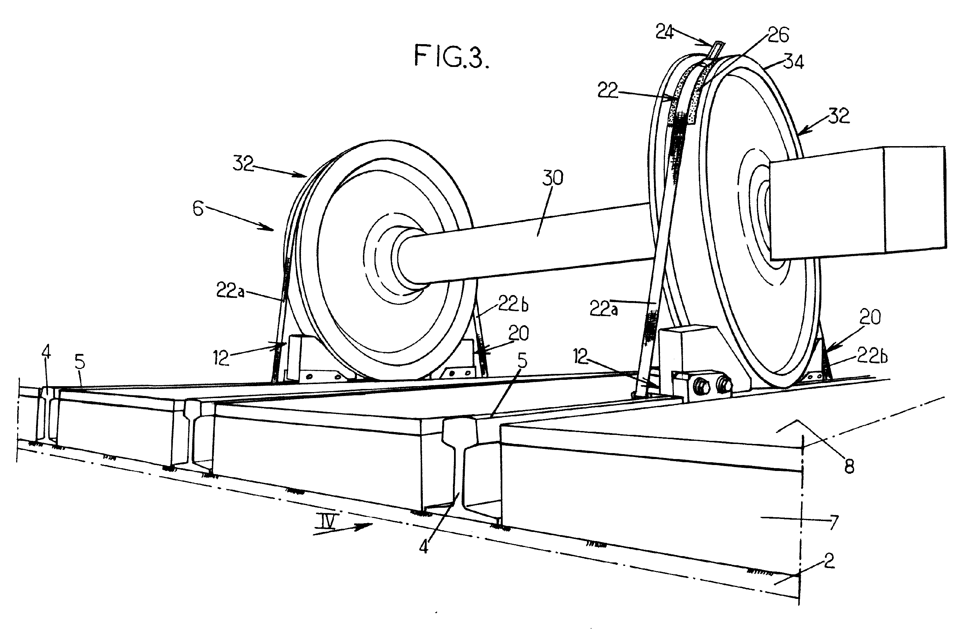

Tel qu'illustré plus particulièrement à la figure 3, un plancher 8, constitué par une succession de portions, s'étend entre les rails 4 en ménageant un léger espacement suivant la direction longitudinale X entre ces différentes portions et les rails 4. Le plancher 8 présente une surface supérieure plane coplanaire avec la surface supérieure 5 des rails 4, autrement dit les rails 4 affleurent le plancher 8. Le plancher 8 est supporté sur la structure de base 2 par des entretoises métalliques 7, définissant ainsi un caisson entre les rails 4. Les entretoises 7 sont disposées sous le plancher 8, à proximité de sa périphérie.

Les essieux 6 sont constitués chacun de deux roues 32 reliées par un arbre 30. Les roues 32 présentent un bandage périphérique 34 venant au contact des rails 4.

Les éléments d'arrêt 12, 20 servant à empêcher chaque essieu de rouler sur les rails 4 suivant la direction transversale Y. Ils comprennent pour maintenir chacune des roues 32 un élément d'arrêt fixe 20 et un élément d'arrêt réglable 12 maintenus directement sur les rails 4. L'élément d'arrêt réglable 12 peut être déplacé le long des rails 4 suivant la direction transversale Y pour s'adapter aux différents diamètres des bandages périphériques 34. L'élément d'arrêt fixe 20 sert de référence et n'est pas destiné à être déplacé. Toutefois, l'élément d'arrêt fixe et l'élément d'arrêt réglable 12 peuvent être identiques.

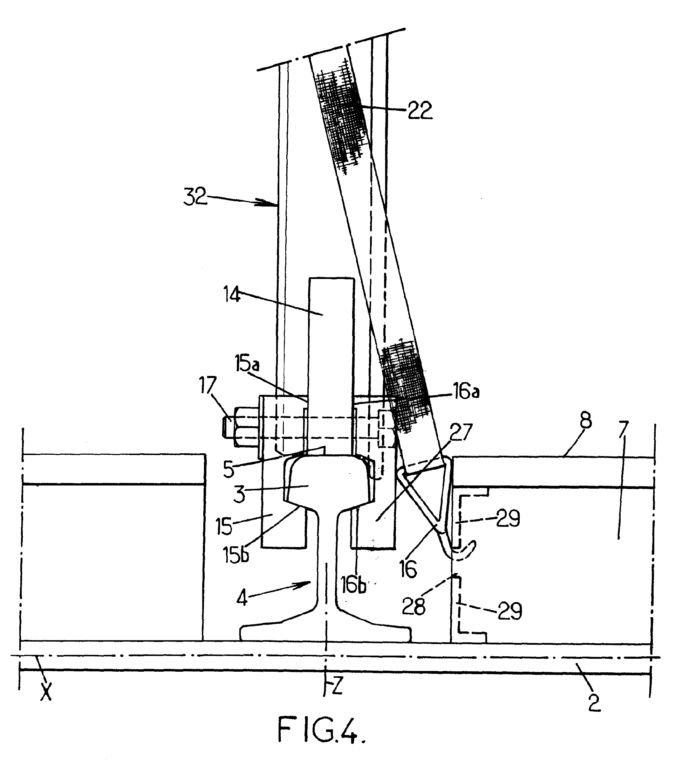

Tel qu'illustré plus particulièrement à la figure 4, chacun des éléments d'arrêt mobile 12 comprend une cale 14 formant butée pour la roue 32, deux mâchoires 15, 16 formant pince, et au moins un, ici avantageusement deux boulons 17 et deux ressort 18.

Les boulons 17 traversent les mâchoires 15, 16 et la cale 14 pour les maintenir ensemble. Les mâchoires 15, 16 présentent chacune une surface 15a, 16a venant en appui sur la cale 14 et formant surface de pivotement. Elles présentent en outre chacune une surface de serrage 15b, 16b venant enserrée la partie supérieure renflée 3 du rail 4. Le ressort 18 tend à écarter les surfaces de serrage 15b, 16b des mâchoires 15, 16 de la partie supérieure renflée 3 du rail 4, tandis que le vissage des boulons 18 tend à les en rapprocher et à augmenter la pression qu'elles exercent sur partie supérieure renflée 3 du rail 4.

Ainsi, en dévissant légèrement les boulons 18, on supprime le serrage exercé par les mâchoires 15, 16 sur la partie supérieure renflée 3 du rail 4, tout en conservant ladite partie supérieure renflée 3 du rail 4 prisonnière des mâchoires 15, 16, de sorte que à permettre le déplacement de l'élément d'arrêt mobile 12 par coulissement le long des rails 4 suivant la direction transversale Y.

Les éléments de bridage 22, 24, 26, 27, 28 servent à empêcher les essieux 6 de se déplacer suivant la direction d'élévation Z, et donc de quitter les rails 4. Tel qu'illustré aux figures 3 et 4, les éléments de bridage comprennent chacun une sangle 22 venant autour du bandage 34 de la roue 32 pour appliquer sur la roue une pression vers le rail 4. La sangle 22 comprend deux portions 22a, 22b reliées chacune à une extrémité à la structure de base 2 et à l'autre extrémité à l'autre portion par un dispositif de mise en tension 24.

Un crochet 27 s'insérant dans un trou 28 relie chacune des portions 22a, 22b de la sangle 22 à la structure de base 2. Le trou 28 maintenant la sangle 22 est disposé du même côté du rail 4 que l'autre roue 32 de l'essieu 6 à maintenir. Le trou 28 est réalisé dans l'une des entretoises 7 s'étendant à proximité du rail 4, suivant la direction longitudinale X. L'entretoise 7 est renforcée en périphérie du trou 28 par une plaque 29, ici en forme de cornière.

Le dispositif de mise en tension 24 est bien connu en soit, et permet de raccourcir la longueur de l'une des deux portions 22a, 22b de la sangle, par exemple par un système à cliquet. Les deux portions 22a, 22b de sangle présentant sensiblement la même longueur, le dispositif de mise en tension 24 est disposé sensiblement au sommet de la roue 32. Un patin d'appui 26 solidaire du dispositif de mise en tension 24 est interposé entre le dispositif de mise en tension 24 et le bandage 34 de la roue 32.

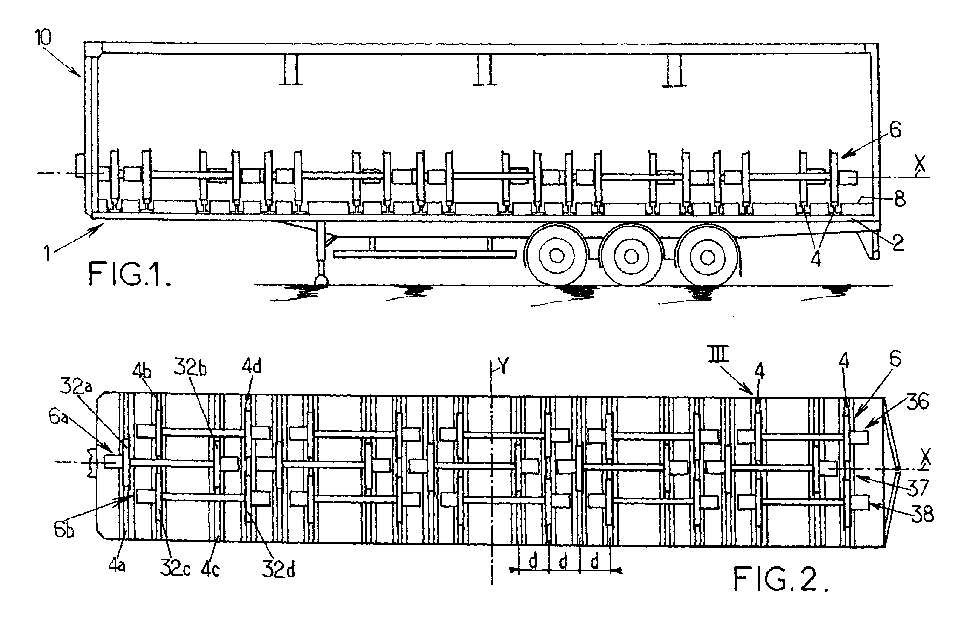

Par ailleurs, tel qu'illustré à la figure 2, les essieux 6 sont disposés sous forme de rangées 36, 37, 38, ici trois, s'étendant suivant la direction longitudinale X. Chacune des rangées comprend ici cinq essieux 6. De plus, les essieux 6 sont disposés en quinconce, de sorte que deux rangées d'essieux 36, 38 n'ont aucun décalage suivant la direction longitudinale X et portent sur les mêmes rails 4, tandis qu'entre ces deux rangées 36, 38, une autre rangée 37 est légèrement décalée suivant la direction longitudinale X, de sorte que les essieux de cette rangée centrale 37 portent sur des rails qui ne servent pas aux deux rangées 36, 38 qui sont situées de part et d'autre d'elle.

Ainsi, les rails 4a, 4b, 4c, 4d se succèdent dans cet ordre suivant la direction longitudinale X, un essieu 6a de la rangée centrale 37 comporte une roue 32a reposant sur le rail 4a et une roue 32b reposant sur le rail 4c, tandis qu'un essieu 6b de la rangé latérale 38 comporte une roue 32c reposant sur le rail 4b et une roue 32d reposant sur le rail 4d.

Le décalage entre les rangées 36, 37, 38 permet de placer l'une des roues d'un essieu entre deux essieux consécutifs d'une rangée adjacente.

Exceptés aux extrémités, les rails 4 se succèdent suivant la direction longitudinale X par groupes de 4 rails avec un décalage d compris de préférence entre 40 centimètres et 60 centimètres et avantageusement sensiblement égal à 45 centimètres.

Toutefois, d'autres configurations peuvent être envisagées, notamment afin de tenir compte des caractéristiques des essieux à transporter. L'invention S'applique en effet notamment et de manière non limitative à des essieux de 2 300 millimètres de long à balancier, à disque, à disques et balancier, et à des essieux de 2 550 millimètres de long à balancier, à boîte ronde, à boîte ronde et disques.

## Revendications

1. Véhicule de transport (1) destiné au transport d'essieux de wagons et de voitures de chemin de fer, s'étendant suivant une direction longitudinale (X) et comprenant une structure de base (2), une succession de rails (4) solidaires de la structure de base (2) et s'étendant suivant une direction de stockage (Y), des éléments d'arrêt (12, 20) pour empêcher les essieux (6) de rouler le long des rails (4) suivant la direction de stockage (Y), des éléments de bridage (22, 24, 26, 27, 28) aptes à maintenir les essieux (6) au contact des rails (4).

2. Véhicule selon la revendication 1, dans lequel les éléments de bridage comprennent une sangle (22) munie d'un dispositif de mise en tension (24) de la sangle.

3. Véhicule selon la revendication précédente, dans laquelle le dispositif de mise en tension (24) est recouvert d'un patin d'appui (26) destiné à venir au contact de l'essieu (6).

4. Véhicule selon l'une quelconque des revendications précédentes, dans lequel les rails (4) font saillie par rapport à la structure de base (2) jusqu'à une extrémité supérieure (5), et le véhicule (1) comprend en outre un plancher (8) sensiblement plat s'étendant entre les rails (4), sensiblement jusqu'au niveau de leur extrémité supérieure (5).

5. Véhicule selon l'une quelconque des revendications précédentes, dans lequel les rails (4) sont constitués par un profilé présentant une portion supérieure renflée (3) et les éléments d'arrêt comprennent au moins une cale (14) maintenue par pincement (15, 16, 17) sur la partie supérieure renflée (3) d'un des rails.

6. Véhicule selon l'une quelconque des revendications précédentes, dans lequel la direction de stockage (Y) est sensiblement perpendiculaire à la direction longitudinale (X)

7. Véhicule selon la revendication précédente dans lequel le véhicule (1) comprend une succession d'au moins quatre rails (4a, 4b, 4c, 4d) décalés l'un de l'autre suivant la direction longitudinale (X) d'une distance (d) comprise entre 40 et 60 centimètres, de préférence sensiblement de 45 centimètres.

8. Ensemble (10) comprenant un véhicule selon l'une quelconque des revendications précédentes et un essieu (6) comportant deux roues (32) présentant chacune un bandage (34) périphérique et reliées l'une à l'autre par un arbre (30).

9. Ensemble selon la revendication précédente, dans lequel les éléments de bridage (22, 24, 26) prennent appui sur le bandage (34) de chacune des roues (32).

10. Ensemble selon l'une quelconque des revendications 8 ou 9, dans lequel les éléments de bridage (27, 28) sont maintenus sur la structure de base (2), à proximité des rails (4) et entre les rails sur lesquels l'essieu (6) qu'ils maintiennent vient en appui.

11. Ensemble selon l'une quelconque des revendications 8 à 10, présentant un premier essieu (6a) et un deuxième essieu (6b), le premier essieu (6a) comprenant une roue (32a) reposant sur un premier rail (4a) et une roue (32b) reposant sur un deuxième rail (4c), le deuxième essieu (6b) comprenant une roue (32c) reposant sur un troisième rail (4b) et une roue reposant sur un quatrième rail (4d), le troisième rail (4b) s'étendant entre le premier rail (4a) et le deuxième rail (4c), et le deuxième rail (4c) s'étendant entre le troisième rail (4b) et le quatrième rail (4d).
